# EUROPÄISCHE PATENTSCHRIFT

(11) **EP 1 915 930 B1**
(45) Veröffentlichungstag und Bekanntmachung des Hinweises auf die Patenterteilung: **31.10.2012**
(21) Anmeldenummer: 07118636.5
(22) Anmeldetag: 17.10.2007
(51) Int. Cl.: A47J 27/21

(54) **Wasserkocheinrichtung sowie Filtervorrichtung dafür**
Water boiling device and filter device therefor
Dispositif de cuisson à l'eau ainsi que son dispositif de filtrage

(30) Priorität: 19.10.2006 DE 202006016221 U
(43) Veröffentlichungstag der Anmeldung: 30.04.2008
(73) Patentinhaber: WIK Far East Ltd., Hong Kong (CN)
(72) Erfinder: Becker, Dietmar, 42477, Radevormwald (DE)
(74) Vertreter: Haverkamp, Jens

(56) Entgegenhaltungen:
- EP-A- 1 028 090
- EP-A- 1 527 720
- DE-U1- 8 805 999

## Beschreibung

Die Erfindung betrifft eine Wasserkocheinrichtung, umfassend einen auf eine Energievorsorgungseinheit aufstellbaren und elektrisch an diesen anschließbaren Wasserkocher mit einem Deckel sowie umfassend eine Vorrichtung zum Filtern von in den Wasserkocher einzufüllendem Wasser mit einem Rohwasserbehälter zum Bevorraten des in den Wasserkocher einzufüllenden Wassers.

Es ist bekannt, dass zum Verbessern der Qualität von Wasser, insbesondere von Leitungswasser Filtervorrichtungen eingesetzt werden, durch die das Rohwasser vor seinem Gebrauch hindurchgeführt wird. Im Zusammenhang mit Wasserkochern sind Wasserkocheinrichtungen entwickelt worden, die zwei Behälter aufweisen, welche beiden Behälter durch den eigentlichen Filterkörper getrennt sind. Der eine Behälter dient zur Aufnahme des Rohwassers; der andere Behälter dient zur Aufnahme des gefilterten Wassers. Derartige Wasserkocheinrichtungen verfügen zudem über eine Heizeinrichtung zum Erwärmen des gefilterten Wassers. Eine solche Wasserkocheinrichtung ist beispielsweise aus DE 198 61 175 B4 oder GB 2 294 631 A bekannt. Bei diesen vorbekannten Wasserkocheinrichtungen ist die Handhabung aufgrund der Größe des Geräts mitunter umständlich.

Neben diesen als Kompletteinheiten anzusprechenden Wasserkocheinrichtungen sind auch solche bekannt geworden, bei denen der Wasserkocher von der Filtervorrichtung trennbar ist. Beschrieben ist eine solche Wasserkocheinrichtung in EP 1 028 090 A1. Diese Wasserkocheinrichtung verfügt über eine Filtervorrichtung mit einem Rohwasserbehälter und einem das gefilterte Wasser aufnehmenden Filtratbehälter. Der Rohwasserbehälter ist oberhalb des Filtratbehälters angeordnet. Der Filtereinrichtung ist eine Pumpe sowie ein Zapfhahn als Auslauf zugeordnet. Die Pumpe dient zum Fördern des gefilterten Wassers in den Auslauf, der oberhalb des Wasserkochers angeordnet ist. Teil der Wasserkocheinrichtung ist des Weiteren eine Energieversorgungseinheit, über die dem von der Energieversorgungseinheit abnehmbaren Wasserkocher der notwendige.

Strom zum Betreiben der dem Wasserkocher zugeordneten Heizeinrichtung zugeführt wird. Der Deckel des Wasserkochers weist eine Einlassöffnung auf, die sich unterhalb des Auslaufes des Zapfhahnes befindet, wenn der Wasserkocher auf die Energieversorgungseinheit aufgestellt ist. Zum Befüllen des Wasserkochers mit gefiltertem Wasser wird die Pumpe betätigt. Die in diesem Dokument beschriebene Wasserkocheinrichtung ist relativ groß bauend. Überdies wird als nachteilig bei dieser Wasserkocheinrichtung angesehen, dass beim Erhitzen von Wasser in dem Wasserkocher durch die notwendige Einlassöffnung in dem Deckel zum Befüllen des Wasserkochers Wasserdampf austreten und Energie verloren geht.

Ausgehend von diesem zuletzt diskutierten Stand der Technik liegt der Erfindung daher die Aufgabe zugrunde, eine eingangs genannte Wasserkocheinrichtung dergestalt weiterzubilden, dass diese nicht nur kleiner bauend und der Energieverbrauch zum Erwärmen des Wassers grundsätzlich nicht höher ist als bei herkömmlichen Wasserkochern, sondern auch dass eine Befüllung des Wasserkochers ohne weiteres möglich ist.

Diese Aufgabe wird erfindungsgemäß durch eine eingangs genannte, gattungsgemäße Wasserkocheinrichtung gelöst, bei der der Wasserkocher über eine durch seinen Deckel nicht verschließbare Schnaupe verfügt und der Auslauf der Filtervorrichtung, aus der das gefilterte, in den Wasserkocher einzufüllende Wasser austritt, oberhalb der Öffnung der Schnaupe angeordnet ist, wenn sich der Wasserkocher zum Befüllen auf der Energieversorgungseinheit befindet, so dass die Schnaupe zum Befüllen des Wasserkochers das aus dem Auslauf austretende gefilterte Wasser auffängt, und der Rohwasserbehälter mit der Filtervorrichtung und seinem Auslauf auf einem Niveau oberhalb der Öffnung der Schnaupe des Wasserkochers angeordnet ist.

Bei dieser Wasserkocheinrichtung erfolgt eine Befüllung des Wasserkochers über seine Schnaupe. Die Schnaupe ist zu diesem Zweck nicht mit dem Deckel des Wasserkochers verschließbar oder nicht verschlossen, wenn sich der Wasserkocher zum Befüllen auf der Energieversorgungseinheit befindet. Der Auslauf der Filtervorrichtung befindet sich zum Befüllen des Wasserkochers oberhalb der Schnaupe, so dass der Wasserkocher durch die Schnaupe hindurch befüllt wird. Der Deckel des Wasserkochers muss daher keine gesonderte Einfüllöffnung aufweisen und weist demzufolge auch keine Öffnung auf, durch die Wasserdampf und damit Energie beim Erwärmen des in dem Wasserkocher befindlichen Wassers entweicht. Wasserkocher mit nicht durch einen Deckel verschließbarer Schnaupe sind hinlänglich bekannt. Somit kann prinzipiell jeder Wasserkocher mit einer solchen Schnaupe für eine solche Wasserkocheinrichtung verwendet werden. Der Auslauf der Filtervorrichtung befindet sich oberhalb der Schnaupe ebenso wie der Rohwasserbehälter. Durch die Schnaupe wird somit das aus dem Auslauf auslaufende gefilterte Wasser aufgefangen. Ein Befüllen des Wasserkochers kann allein schwerkraftbedingt erfolgen. Daher werden grundsätzlich keine Einrichtungen zum Fördern des Rohwassers und/oder des gefilterten Wassers zum Einbringen des Letzteren in den Wasserkocher benötigt. Besonders vorteilhaft ist eine Ausgestaltung, bei der der Wasserkocher selbst den Filtratbehälter darstellt, so dass das gefilterte Rohwasser unmittelbar durch den Auslauf in den Wasserkocher einläuft. Da bei einer solchen Ausgestaltung weder elektrische Aggregate zum Fördern von Wasser noch ein separater Filtratbehälter benötigt werden, ist eine solche Wasserkocheinrichtung besonders kompakt bauend.

In einem bevorzugten Ausführungsbeispiel befindet sich der Auslauf der Filtervorrichtung in einer an die Form der Schnaupe angepassten Schnaupenaufnahme der Filtervorrichtung. Der Schnaupenaufnahme und der Schnaupe des Wasserkochers selbst kommen sodann eine Codierfunktion zum bestimmungsgemäßen Anordnen des Wasserkochers auf der Energieversorgungseinheit zu, wenn der Wasserkocher mit gefiltertem Wasser befüllt werden soll. Nur wenn sich die Schnaupe in der Schnaupenaufnahme befindet, ist gewährleistet, dass das aus dem Auslauf auslaufende gefilterte Wasser zum Befüllen des Wasserkochers in diesen einläuft. Zweckmäßigerweise befindet sich in dem Auslauf der Filtervorrichtung ein Auslaufventil zum Öffnen und Sperren des Auslaufens von gefiltertem Wasser. Man kann dann den Wasserkocher nutzen, um Rohwasser in den Rohwasserbehälter einzufüllen, wodurch sichergestellt ist, dass in den Rohwasserbehälter nur eine solche Menge an Rohwasser eingefüllt wird, die nach dem Filtern auch von dem Wasserkocher aufgenommen werden kann. Bei dem Auslaufventil kann es sich grundsätzlich um ein manuell oder elektromechanisch betätigbares Ventil handeln. Bevorzugt ist eine Ausgestaltung, bei der sich das Auslaufventil in seiner Offenstellung befindet, wenn der Wasserkocher auf die Energieversorgungseinheit aufgesetzt ist und die Schnaupe in die Schnaupenaufnahme eingreift. Dieses lässt sich beispielsweise durch Vorsehen eines Schiebeventils mit einem Schieber als Stellelement realisieren, gegen den die Schnaupe des Wasserkochers wirkt, wenn der Wasserkocher auf die Energieversorgungseinheit aufgestellt und die Schnaupe in die Schnaupenaufnahme eingeführt wird. Das Anordnen eines solchen mechanischen Stellelementes in einer Schnaupenaufnahme hat zum Vorteil, dass ein unbeabsichtigtes Betätigen des Stellelementes und damit ein unbeabsichtigtes Auslaufenlassen von gefiltertem Wasser verhindert ist. Das Auslaufventil ist zweckmäßigerweise selbst schließend, so dass dieses zwangsläufig schließt, wenn der Wasserkocher von der Energieversorgungseinheit abgenommen wird bzw. die Schnaupe aus der Schnaupenaufnahme herausbewegt worden ist.

Für den Fall, dass bei einer Wasserkocheinrichtung Flüssigkeit in dem Wasserkocher erwärmt werden soll, die nicht aus der Filtervorrichtung stammt, wird der Wasserkocher auf die Energieversorgungseinheit in einer Anordnung aufgestellt, in der die Schnaupe nicht in die Schnaupenaufnahme hineinragt. Dann fließt kein gefiltertes Wasser in den Wasserkocher.

Der Rohwasserbehälter befindet sich vorzugsweise auf einem Niveau oberhalb des Deckels des Wasserkochers, und zwar zweckmäßigerweise in einer Erstreckung, dass der Rohwasserbehälter den Wasserkocher zumindest teilweise oberseitig überragt. Durch eine solche Maßnahme erhält der Rohwasserbehälter eine relativ große Grundfläche, damit ohne große Höhe ein ausreichendes Füllvolumen bereitgestellt werden kann, ohne dass die Wasserkocheinrichtung selbst eine größere Stellfläche benötigt, als grundsätzlich von der Energieversorgungseinheit und dem darauf aufgestellten Wasserkocher beansprucht. Überdies unterstützt diese Maßnahme einen sicheren Stand der Wasserkocheinrichtung, insbesondere mit befülltern Rohwasserbehälter.

Nachfolgend ist die Erfindung anhand eines Ausführungsbeispiels unter Bezugnahme auf die beigefügten Figuren beschrieben. Es zeigen:
- **Fig. 1:**: eine perspektivische Ansicht einer Wasserkocheinrichtung,
- **Fig. 2:**: eine perspektivische Ansicht nach Art einer Explosionsdarstellung der Wasserkocheinrichtung der Figur 1,
- **Fig. 3:**: einen Längsschnitt durch die Wasserkocheinrichtung der Figur 1,
- **Fig. 4:**: eine weitere Filtervorrichtung zum Ausgeben von gefiltertem Wasser in einer Längsschnittdarstellung,
- **Fig. 5:**: einen vergrößerten Ausschnitt des Auslaufbereiches der Filtervorrichtung der Figur 4,
- **Fig. 6:**: eine Ansicht von unten auf den Auslauf der Filtervorrichtung der Figur 5,
- **Fig. 7:**: die Filtervorrichtung der Figur 5 mit einem zum Befüllen angeordneten Wasserkocher und
- **Fig. 8:**: der in Figur 5 gezeigte vergrößerte Bereich des Auslaufes der Filtervorrichtung in der Ventilstellung zum Befüllen des Wasserkochers.

Eine Wasserkocheinrichtung 1 verfügt über einen Wasserkocher 2 und eine Filtervorrichtung 3. Bei dem Wasserkocher 2 handelt es sich um einen handelsüblichen elektrischen Wasserkocher mit einer elektrischen Heizeinrichtung unterhalb des Bodens des Wasserbehälters, einer elektrischen Steuereinrichtung, einem Ein-Schalter sowie einem Griff 4. Der Einfachheit halber sind die elektrischen Einrichtungen des Wasserkochers 2 nicht dargestellt. Der Wasserkocher 2 sitzt abnehmbar auf einer Energieversorgungseinheit 5. Die Energieversorgungseinheit 5 ist über ein in den Figuren nicht dargestelltes Netzkabel an das Stromnetz anschließbar. Die Energieversorgungseinheit 5 verfügt über ein elektrisches Steckerteil 6, das zum Kontaktieren der elektrischen Verbraucher in dem Wasserkocher 2 in eine komplementäre Buchse im Boden des Wasserkochers 2 eingreift.

Der Wasserkocher 2 verfügt über einen Deckel 7 sowie über eine dem Griff 4 gegenüberliegend angeordnete Schnaupe 8. Die Schnaupe 8 ist durch den Deckel 7 in seiner Geschlossenstellung nicht verschlossen.

Die Filtervorrichtung 3 umfasst einen Rohwasserbehälter 9 mit einem oberseitigen Klappdeckel 10. Der Rohwasserbehälter 9 wird von einem Gestell 11 getragen, das unterseitig über einen Montagering 12 verfügt. Der Montagering 12 dient zum mechanischen Anschließen des Gestells 11 und damit der Filtervorrichtung 3 an die Energieversorgungseinheit 5. Der Montagering 12 fasst die Energieversorgungseinheit 5 ein. Der Montagering 12 ist an der äußeren zylindrischen Mantelfläche Energieversorgungseinheit 5 verklemmt gehalten.

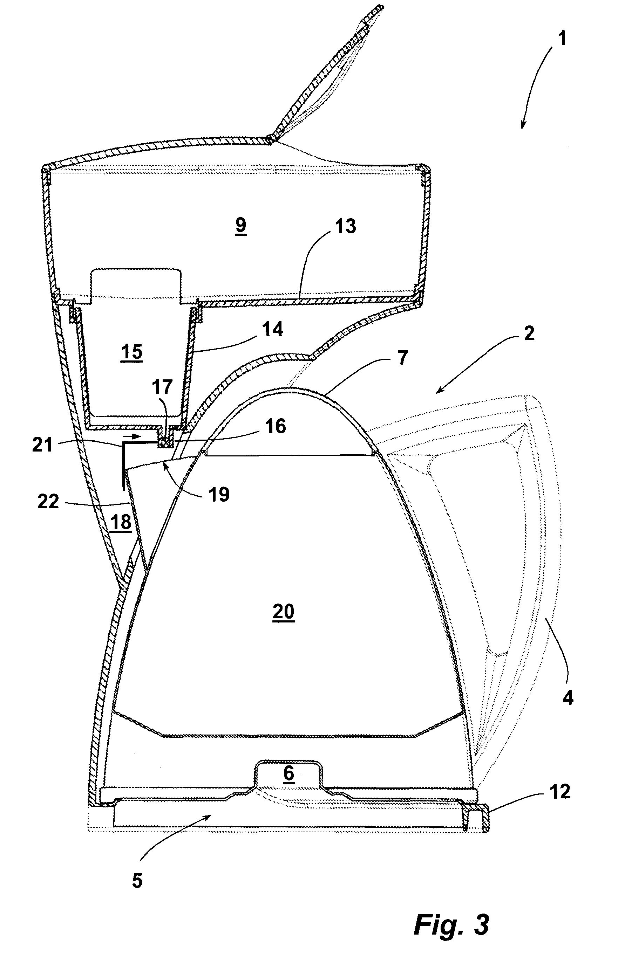

In dem Boden 13 des Rohwasserbehälters 9 befindet sich eine Filteraufnahme 14, die sich, wie in Figur 3 erkennbar, von dem Boden 13 nach unten hin erstreckt. Die Filteraufnahme 14 dient zur Aufnahme einer Filterkartusche 15. Die Filterkartusche 15 ragt mit ihrem oberen Abschluss über den Boden 13 des Rohwasserbehälters 9 hinaus und kann daher nicht nur von oben, sondern auch seitlich angeströmt werden. Die Filteraufnahme 14 weist an ihrem unteren Abschluss einen Auslauf 16 auf. Der in den Auslauf 16 mündende Boden der Filteraufnahme ist zum Auslauf 16 hin geneigt ausgebildet. In den Auslauf 16 ist ein Auflaufventil 17 eingeschaltet. Das Auslaufventil 17 ist in Figur 3 der Einfachheit halber nur schematisiert dargestellt.

Das Gestell 11, welches hinsichtlich seiner Formgebung der Formgebung des Wasserkochers 2 folgt, verfügt über eine Schnaupenaufnahme 18, in die die Schnaupe 8 des Wasserkochers 2 eingreift, wenn der Wasserkocher 2 mit gefiltertem Wasser befüllt werden soll und zu diesem Zweck auf die Energieversorgungseinheit 5 aufgestellt ist. Der Auslauf 16 der Filteraufnahme 14 und damit der Filtervorrichtung 3 befindet sich ebenfalls innerhalb der Schnaupenaufnahme 18, und zwar dergestalt, dass der Auslauf 16 bei in die Schnaupenaufnahme 18 eingreifender Schnaupe 8 oberhalb der Öffnung 19 der Schnaupe 8 angeordnet ist. Wird bzw. ist in der in Figur 3 gezeigten Stellung des Wasserkochers 2 mit seiner in die Schnaupenaufnahme 18 eingreifenden Schnaupe 8 das Auslaufventil 17 geöffnet, läuft gefiltertes Wasser aus der Filteraufnahme 14 in den Wasserbehälter 20 des Wasserkochers 2 ein. Das Füllvolumen des Rohwasserbehälters 9 entspricht bei dem dargestellten Ausführungsbeispiel dem maximalen Füllvolumen des Wasserbehälters 20 des Wasserkochers 2.

Zum Betätigen des Auflaufventils 17, bei welchem es sich bei dem dargestellten Ausführungsbeispiel um ein Schiebeventil handelt, dient ein Stellelement 21, gegen das die Schnaupe 8 mit ihrer Vorderseite 22 wirkt und dieses in die Offen-Stellung des Auslassventils 17 verschiebt, wenn die Schnaupe 8 in die Schnaupenaufnahme 18 eingeführt wird. Diese Öffnungsbewegung des Stellelements 21 erfolgt gegen die Kraft einer Rückstellfeder (in den Figuren nicht dargestellt), so dass beim Abnehmen des Wasserkochers 2 von der Energieversorgungseinheit 5, bei dem die Schnaupe 8 aus der Schnaupenaufnahme 18 heraus bewegt wird, das Auslaufventil 17 selbsttätig schließt, wie dieses durch den Pfeil in Figur 3 angedeutet ist.

Der Rohwasserbehälter 9 befindet sich, wie aus Figur 3 erkennbar, oberhalb des oberen Abschlusses des Wasserkochers 2 und erstreckt sich ebenfalls über diesen hinweg. Dadurch wird im Wesentlichen die gesamte Stellfläche des Montageringes 12 des Gestells 11 der Filtervorrichtung 3 bzw. der Energieversorgungseinheit 5 für den Rohwasserbehälter 9 genutzt. Damit dieser über das notwendige Füllvolumen verfügt, braucht dieser daher nur eine relativ geringe Höhe aufzuweisen, so dass die Wasserkocheinrichtung 1 kompakt bauend ausgelegt ist.

Die Filterkartusche 15 ist austauschbar in der Filteraufnahme 14 aufgenommen, so dass diese nach ihrer Erschöpfung gegen eine neue Filterkartusche ausgetauscht werden kann. Die Filterkartusche 15 ist zweckmäßigerweise über eine Verrastung in der Filteraufnahme 14 gehalten.

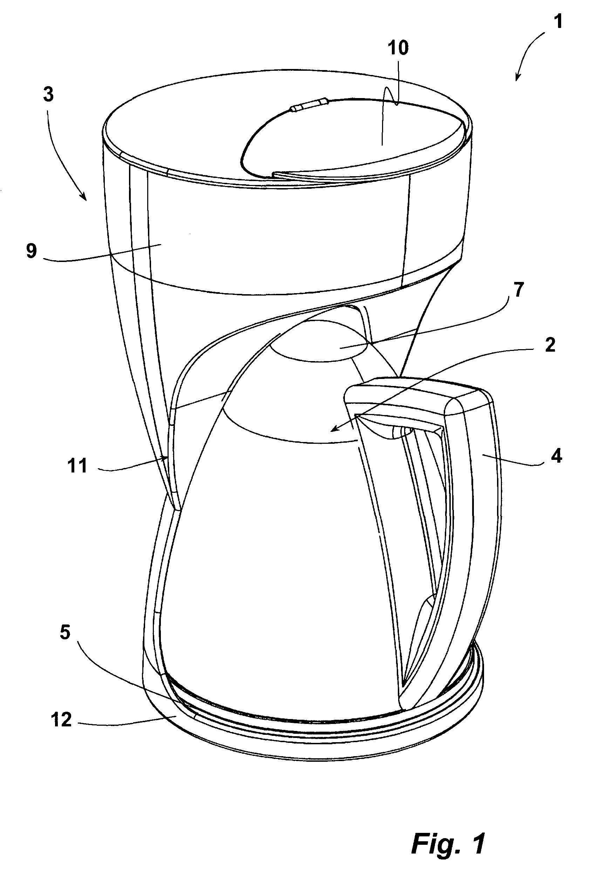

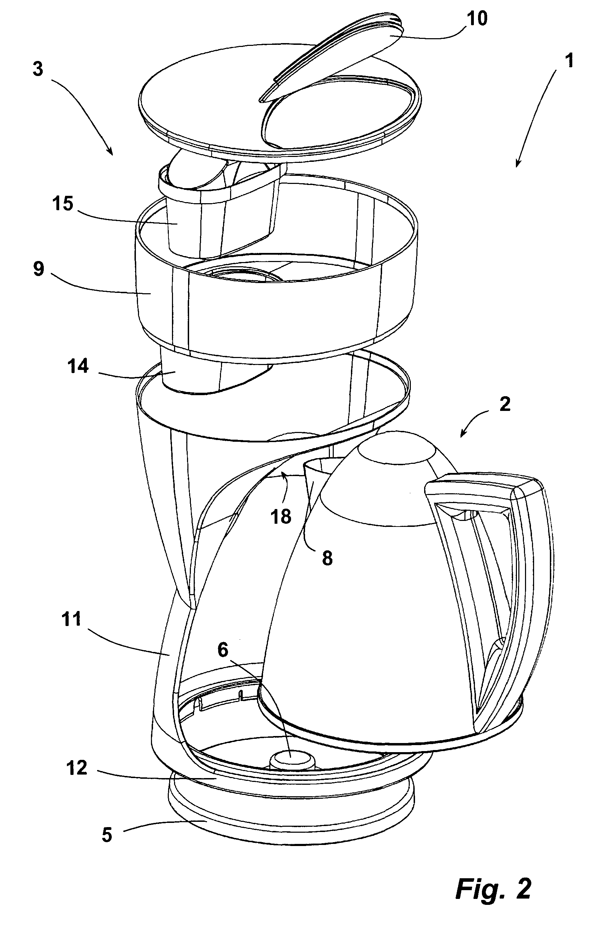

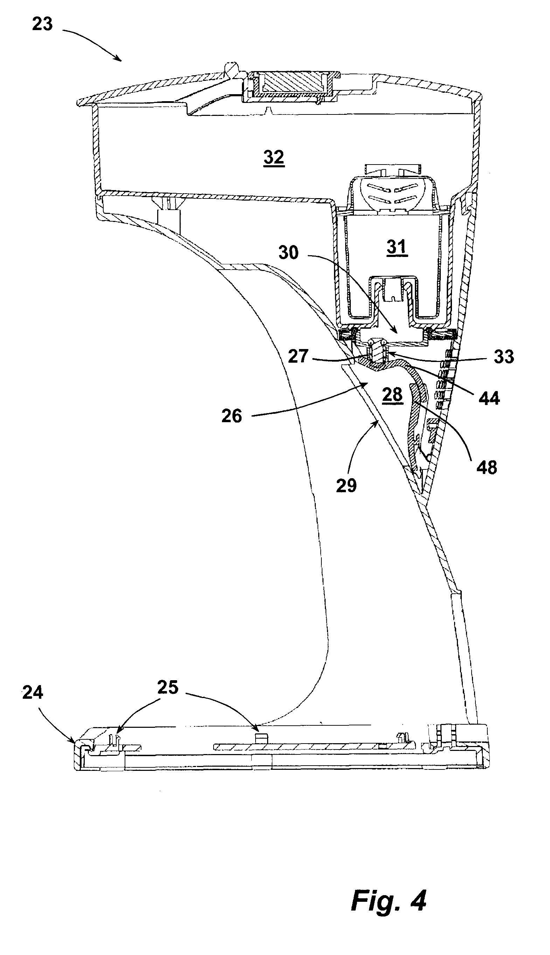

Figur 4 zeigt in einem Längsschnitt eine weitere Filtervorrichtung 23. Die Filtervorrichtung 23 ist grundsätzlich konzipiert wie die zu dem Ausführungsbeispiel der Figuren 1 bis 3 beschriebene Filtervorrichtung 3. Die Filtervorrichtung 23 trägt an der Innenseite seines unteren Montageringes 24 hakenartige Rastvorsätze 25, zwischen die eine Energieversorgungseinheit zum Aufsetzen eines Wasserkochers eingesetzt werden kann.

Die Filtervorrichtung 23 unterscheidet sich von der Filtervorrichtung 3 insbesondere durch die Konzeption seines Auslaufes 26 bzw. seines Auslaufventils 27. Zum Ausbilden einer Schnaupenaufnahme 28 ist gehäuseseitig eine Öffnung 29 vorgesehen. Die Kontur der Öffnung 29 ist konzipiert, damit darin die Schnaupe eines Wasserkochers einpasst. Der Auslauf 26 verfügt über ein Auffangelement 30, in das das aus der Filterkartusche 31 gefilterte Wasser einfließt bzw. bei gefülltem Rohwasserbehälter 32 ansteht. Das Auffangelement 30 verfügt über eine nach unten angeformten rohrartigen Fortsatz 33, der einen Ventilkanal 34 einfasst. In dem Ventil kanal 34 ist ein Ventilstößel 35 in längsaxialer Richtung bewegbar. Der Ventilschlüssel 35 durchgreift mit seinem Kopf den Boden 36 des Auffangelementes 30 und trägt im Bereich seines Kopfes einen im Schnitt dargestellten Dichtring 37. Der Dichtring 37 ist einer umlaufenden Nut 38 des Kopfes des Ventilstößels 35 gehalten.

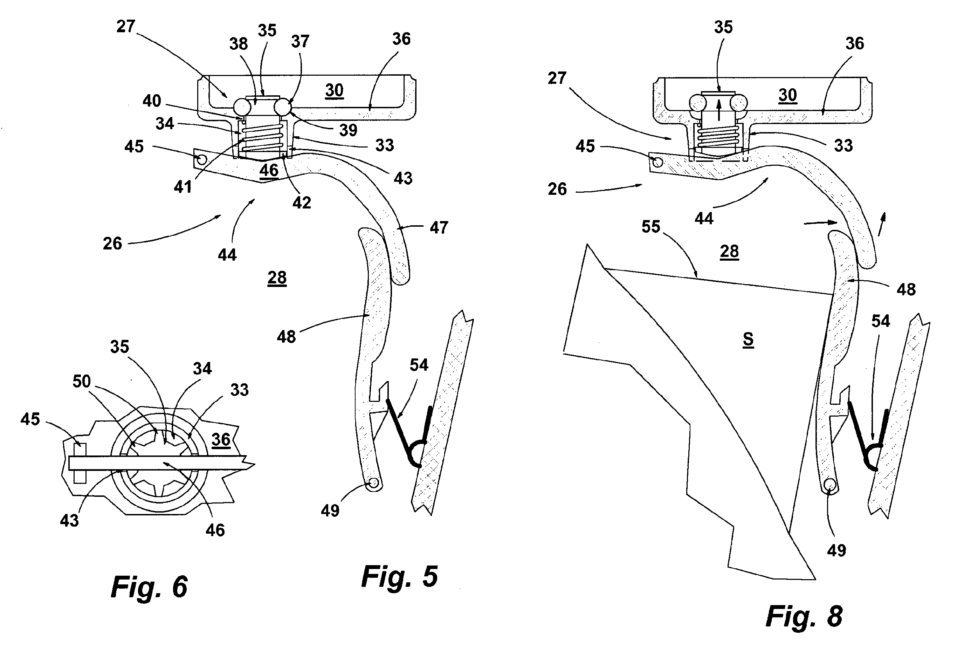

In der in den Figuren 4 und 5 gezeigten geschlossenen Stellung des Auslaufventils 27 liegt der Dichtring 37 auf seinem Ventilsitz 39 als Teil des Bodens 36 abdichtend an. Unterhalb des Ventilsitzes 39 ist an dem den Ventilkanal 34 bildenden Fortsatz 33 ein nach innen vorspringender Abstützflansch 40 angeformt. An diesem stützt sich eine Schraubendruckfeder 41 mit ihrem einen Ende ab. Die Schraubendruckfeder 41 dient zum Bereitstellen des zum Verschließen des Auslaufventils 27 notwendigen, auf den Dichtring 37 wirkenden Anpressdruckes. Die Schraubendruckfeder 41 stützt sich mir ihrem anderen Ende auf einen Stützflansch 42 im Bereich des Fußes des Ventilstößels 35 ab. Ausgehend von der unteren Mündung des Fortsatzes 33 sind in diesen zwei aneinander diametral gegenüber liegenden Schlitze 43 eingebracht. Die stirnseitige Fläche des Fußes des Ventilstößels 35 ist nach unten hin konisch verjüngt und dient als Stellfläche für ein mit dem Bezugszeichen 44 in Figur 5 gekennzeichnetes Stellelement. Das Stellelement 44 dient zum Betätigen des Ventilstößels 35 mithin zum Öffnen des Auslaufventils 27. Das Stellelement 44 ist gehäuseseitig um eine Achse 45 schwenkbar gelagert. Das Stellelement 44 verfügt über einen Stellabschnitt 46, der bei geschlossenem Ventil 26 in einem geringen Abstand unterhalb der Stellfläche de Fußes des Ventilstößels 35 angeordnet ist. Die Kontur der Oberseite des Stellabschnittes 46 ist an die Kontur des Fußes des Ventilstößels 35 angepasst. Das Stellelement 44 verfügt des Weiteren über einen abgewinkelt zu diesem angeordneten Betätigungsabschnitt 47. Bei den dargestellten Ausführungsbeispiel ist ein gekrümmter Übergang zwischen dem Stellabschnitt 46 und dem Betätigungsabschnitt 47 vorgesehen. Der Betätigungsabschnitt 47 ragt in die Schnaupenaufnahme 28 der Filtervorrichtung 23 hinein. An der in Richtung zur Öffnung 29 der Schnaupenaufnahme 28 weisenden Seite des Betätigungsabschnittes liegt ein Stellhebel 48 an, der ebenfalls gehäuseseitig gelagert. Seine Schwenkachse ist in Figur 5 mit dem Bezugszeichen 49 gekennzeichnet. Die zu der Öffnung 29 weisende Seite des Stellhebels 48 ist die Kontaktfläche, an der die Vorderseite der Schnaupe eines Wasserkochers anstößt, wenn dieser zu seiner Befüllung positioniert wird.

Figur 6 zeigt in einer Ansicht von unten den Bereich des Auslaufes 26. Aus dieser Ansicht in erkennbar, dass der Stellabschnitt 46 des Stellelementes 44 leistenförmig ausgebildet ist, um in die Schlitze 43 des Fortsatzes 33 eingreifen zu können. Aus dieser Perspektive ist ebenfalls die untere Führung des Ventilstößels 35 innerhalb des Ventilkanals 34 erkennbar. Diese erfolgt mittels des Stützflansches 42, der durch einzelne durch einen Winkel beabstandete Fortsätze 50 gebildet ist. Auf der Oberseite der Fortsätze 50 dem Stützflansch (42) stützt sich die Schraubendruckfeder 41 ab. Gleichermaßen ist auch der obere Stützflansch 40 durch einzelne Fortsätze gebildet. Die ist erforderlich, damit das gefilterte Wasser zwischen diesen Fortsätzen in den Ventilkanal 34 ein- und unterseitig aus diesem herausfliesen kann.

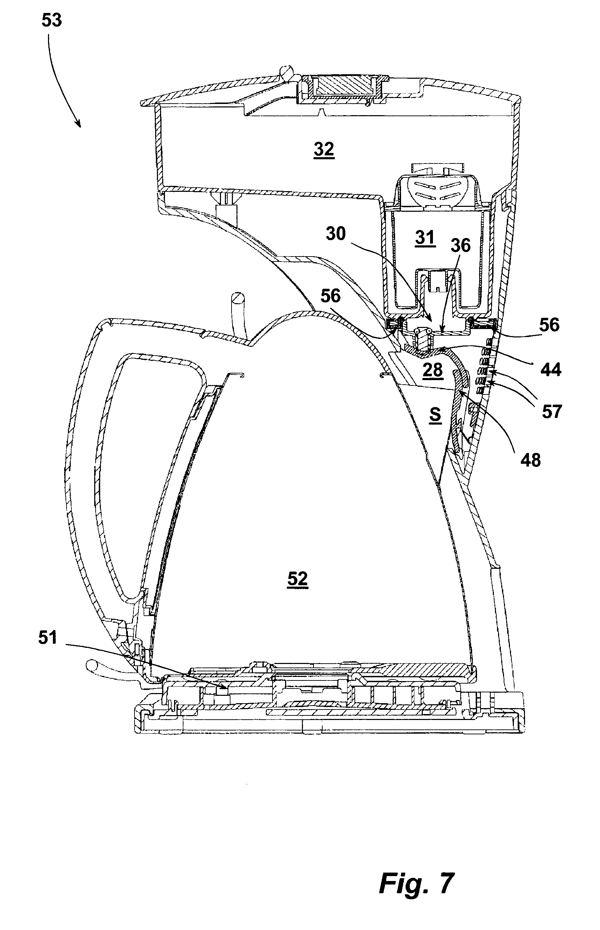

Figur 7 zeigt die um eine Energieversorgungseinheit 51 und einen darauf aufgestellten Wasserkocher 52 erweiterte Filtervorrichtung 23, so dass dann eine Wasserkocheinrichtung 53 gebildet ist. Die Schnaupe S ist in die Schnaupenaufnahme 28 eingeführt und stößt vorderseitig gegen den Stellhebel 48 und hat diesen im Zuge der Einsetzbewegung um seine Schwenkachse 49 wie in Figur 8 verdeutlicht, verschwenkt. Die Verschwenkbewegung erfolgt gegen die Kraft einer Rückstellfeder 54. Im Zuge dieser Bewegung ist ebenfalls das Stellelement 44 um seine Achse 45, wie durch den Pfeil in Figur 8 angedeutet bewegt worden, im Zuge welcher Bewegung der Ventilstößel 35 von seinem Ventilsitz 39 zum Öffnen des Auslaufventils 27 abgehoben worden ist. In der in den Figuren 7 und 8 gezeigten Stellung der Elemente des Auslaufes 26 tritt das in dem Auffangelement 30 befindliche oder darin einfließende gefilterte Wasser durch den Ventilkanal 34 aus und läuft in die obere, unverschlossene Öffnung 55 der Schnaupe S in den Wasserkocher 52 ein.

Wird der Wasserkocher 52 von der Energieversorgungseinheit 51 abgenommen oder zumindest die Schnaupe S aus der Schnaupenaufnahme 28 heraus genommen, schließt das Auslaufventil 27 selbsttätig.

Bei dem darstellten Ausführungsbeispiel ist das Auffangelement 30 unter Einsatz einer umlaufenden Dichtung 56 an das Gehäuse der Filtervorrichtung 23 angeschlossen. Dieses dient dem Zweck, dass bei einem Betrieb des Wasserkochers 52 zum Erwärmen des darin eingefüllten Wassers aus der Öffnung 55 der Schnaupe 54 austretendes Kondenswasser nicht in das Gehäuseinnere eintritt. Zum Auslassen des aus der Öffnung 55 der Schnaupe 54 eintretenden Wasserdampfes dienen mehrere in das Gehäuse durchgreifende Öffnungen 57.

### Bezugszeichenliste

- 1: Wasserkocheinrichtung
- 2: Wasserkocher
- 3: Filtervorrichtung
- 4: Griff
- 5: Energieversorgungseinheit
- 6: Steckerteil
- 7: Deckel
- 8: Schnaupe
- 9: Rohwasserbehälter
- 10: Klappdeckel
- 11: Gestell
- 12: Montagering
- 13: Boden
- 14: Filteraufnahme
- 15: Filterkartusche
- 16: Auslauf
- 17: Auslaufventil
- 18: Schnaupenaufnahme
- 19: Öffnung
- 20: Wasserbehälter
- 21: Stellelement
- 22: Vorderseite
- 23: Filtervorrichtung
- 24: Montagering
- 25: Rastfortsatz
- 26: Auslauf
- 27: Auslaufventil
- 28: Schnaupenaufnahme
- 29: Öffnung
- 30: Auffangelement

- 31: Filterkartusche
- 32: Rohwasserbehälter
- 33: Fortsatz
- 34: Ventilkanal
- 35: Ventilstößel
- 36: Boden
- 37: Dichtring
- 38: Nut
- 39: Ventilsitz
- 40: Stützflansch
- 41: Schraubendruckfeder
- 42: Stützflansch
- 43: Schlitz
- 44: Stellelement
- 45: Achse
- 46: Stellabschnitt
- 47: Betätigungsabschnitt
- 48: Stellhebel
- 49: Schwenkachse
- 50: Fortsatz
- 51: Energieversorgungseinheit
- 52: Wasserkocher
- 53: Wasserkocheinrichtung
- 54: Rückstellfeder
- 55: Schnaupenöffnung
- 56: Dichtung
- 57: Öffnung
- S: Schnaupe

## Patentansprüche

1. Wasserkocheinrichtung, umfassend einen auf eine Energievorsorgungseinheit (5, 51) aufstellbaren und elektrisch an diesen anschließbaren Wasserkocher (2, 52) mit einem Deckel (7) sowie umfassend eine Vorrichtung (3, 23) zum Filtern von in den Wasserkocher (2, 52) einzufüllendem Wasser mit einem Rohwasserbehälter (9, 32) zum Bevorraten des in den Wasserkocher (2, 52) einzufüllenden Wassers, **dadurch gekennzeichnet, dass** der Wasserkocher (2, 52) über eine durch seinen Deckel (7) nicht verschließbare Schnaupe (8, S) verfügt und der Auslauf (16, 26) der Filtervorrichtung (3, 23), aus der das gefilterte, in den Wasserkocher (2, 32) einzufüllende Wasser austritt, oberhalb der Öffnung (55) der Schnaupe (8, S) angeordnet ist, wenn sich der Wasserkocher (2) zum Befüllen auf der Energieversorgungseinheit (5, 51) befindet, so dass die Schnaupe (8, S) zum Befüllen des Wasserkochers (2, 32) das aus dem Auslauf (16, 26) austretende gefilterte Wasser auffängt, und der Rohwasserbehälter (9, 32) mit der Filtervorrichtung (3, 23) und seinem Auslauf (16, 26) auf einem Niveau oberhalb der Öffnung (55) der Schnaupe (8, S) des Wasserkochers (2, 52) angeordnet ist.

2. Wasserkocheinrichtung nach Anspruch 1, **dadurch gekennzeichnet, dass** der Auslauf (16, 26) der Filtervorrichtung (3, 23) in einer an die Form der Schnaupe (8, S) angepassten Schnaupenaufnahme (18, 28) der Filtervorrichtung (3, 23) angeordnet ist.

3. Wasserkocheinrichtung nach Anspruch 1 oder 2, **dadurch gekennzeichnet, dass** die Filtervorrichtung (3, 23) einen Rohwasserbehälter (9, 32) mit einer in seinen Boden (13) eingebrachten Filteraufnahme (14) und einen darin eingesetzten Filterkörper (15) umfasst, wobei der untere Abschluss der Filteraufnahme (14) den Auslauf (16) der Filtervorrichtung (3) bildet.

4. Wasserkocheinrichtung nach Anspruch 3, **dadurch gekennzeichnet, dass** als Filterkörper eine in die Filteraufnahme (14) eingesetzte und aus dieser herausnehmbare Filterkartusche (15, 31) dient.

5. Wasserkocheinrichtung nach einem der Ansprüche 1 bis 4, **dadurch gekennzeichnet, dass** in den Auslauf (16, 26) ein Auslaufventil (17, 27) zum Öffnen und Sperren des Wasserauslaufs aus der Filtervorrichtung (3, 23) eingeschaltet ist.

6. Wasserkocheinrichtung nach Anspruch 5, **dadurch gekennzeichnet, dass** das Auslaufventil (17, 27) selbstschließend ist und über einen durch den Wasserkocher (2, 52) insbesondere seiner Schnaupe (8, S) betätigbares Stellelement (21, 44) zum Öffnen des Auslaufsventils (17, 27) verfügt.

7. Wasserkocheinrichtung nach Anspruch 6, **dadurch gekennzeichnet, dass** das Auslaufventil (17) einen Schieber als Stellelement (21) aufweist, welcher Schieber gegen die Kraft einer Rücksteilfeder mit der Schnaupe (8) des Wasserkochers (2) beim Aufstellen desselben auf die Energieversorgungseinheit (5) in die Offenstellung des Auslaufventils (17) bringbar ist.

8. Wasserkocheinrichtung nach Anspruch 5, **dadurch gekennzeichnet, dass** das Auslaufventil (27) selbstschließend ist und einen in einem Ventilkanal (34) in längsaxialer Richtung bewegbaren, mit seinem Kopf einen Boden (36) durchgreifenden Ventilstößel (35) mit einem unteren Stützflansch (42) aufweist, auf dem sich eine Druckfeder (41) abstützt, die mit ihrem anderen Ende an einem von der inneren Mantelfläche des Ventilkanals (34) nach innen vorspringenden Flansch (40) abgestützt ist und dessen Kopf einen sich auf dem den Ventilkanal (34) einfassenden Bodenbereich bei geschlossenem Ventil aufliegenden Dichtring (37) trägt, wobei die Fußseite des Ventilstößels (35) eine Stellfläche bildet, gegen die ein Stellelement (44) zum Bewegen des Ventilstößels (35) in seine Offenstellung wirkt.

9. Wasserkocheinrichtung nach Anspruch 8, **dadurch gekennzeichnet, dass** das Stellelement (44) ein gehäuseseitig gelagerter Hebel mit einem abgewinkelten Betätigungsabschnitt (47) vorgesehen ist.

10. Wasserkocheinrichtung nach Anspruch 9, **dadurch gekennzeichnet, dass** die Wasserkocheinrichtung (53) einen in der Schnaupenaufnahme (28) angeordneten, gehäuseseitig gelagerten Stellhebel (48) aufweist, gegen den die Schnaupe (S) des Wasserkochers (52) wirkt, wenn dieser zu seiner Befüllung auf die Energieversorgungseinheit (51) gestellt ist, welcher Stellhebel (48) wiederum zum Öffnen des Auslaufventils (27) gegen den Betätigungsabschnitt (47) des Stellelementes (44) wirkt.

11. Wasserkocheinrichtung nach Anspruch 9 oder 10, **dadurch gekennzeichnet, dass** der Ventilkanal (34) eine von seinem auslaufseitigen Ende ausgehenden Schlitz (43) aufweist, in den das Stelleelement (44) zum Öffnen des Auslaufsventils (27) eingreift.

12. Wasserkocheinrichtung nach einem der Ansprüche 1 bis 11, **dadurch gekennzeichnet, dass** die Filtervorrichtung (3) mechanisch an die Energieversorgungseinheit (5) angeschlossen ist.

13. Wasserkocheinrichtung nach Anspruch 12, **dadurch gekennzeichnet, dass** die Filtervorrichtung (3) über einen die Filtervorrichtung (3) unterseitig begrenzenden Montagering (12) verfügt, durch den die Energieversorgungseinheit (5) eingefasst ist.

## Claims

1. Water boiling device, comprising a water boiler (2, 52) mountable on a power supply unit (5, 51) and electrically connectable to the latter and having a lid (7), and comprising a device (3, 23) for filtering water that is to be filled into the water boiler (2, 52), said filtering device having a raw-water tank (9, 32) for storing the water that is to be filled into the water boiler (2, 52), **characterised in that** the water boiler (2, 52) has a spout (8, S) which cannot be closed by the lid (7) thereof, and the outlet (16, 26) of the filtering device (3, 23), from which the filtered water that is to be filled into the water boiler (2, 32) exits, is arranged above the opening (55) of the spout (8, S) when the water boiler (2) is situated on the power supply unit (5, 51) for filling purposes, so that the spout (8, S) for filling the water boiler (2, 32) catches the filtered water exiting from the outlet (16, 26), and the raw-water tank (9, 32) is arranged with the filtering device (3, 23) and the outlet (16, 26) thereof at a level above the opening (55) of the spout (8, S) of the water boiler (2, 52).

2. Water boiling device according to claim 1, **characterised in that** the outlet (16, 26) of the filtering device (3, 23) is arranged in a spout receptacle (18, 28) of the filtering device (3, 23), said spout receptacle being adapted to the shape of the spout (8, S).

3. Water boiling device according to claim 1 or 2, **characterised in that** the filtering device (3, 23) forms a raw-water tank (9, 32) with a filter receptacle (14) incorporated in the base (13) thereof and a filter body (15) inserted in said filter receptacle, wherein the lower end of the filter receptacle (14) forms the outlet (16) of the filtering device (3).

4. Water boiling device according to claim 3, **characterised in that** the filter body used is a filter cartridge (15, 31) which is inserted in the filter receptacle (14) and can be removed therefrom.

5. Water boiling device according to any one of claims 1 to 4, **characterised in that** fitted in the outlet (16, 26) is an outlet valve (17, 27) for enabling and blocking the discharge of water from the filtering device (3, 23).

6. Water boiling device according to claim 5, **characterised in that** the outlet valve (17, 27) is self-closing and has an actuator (21, 44) for opening the outlet valve (17, 27), which actuator can be operated by the water boiler (2, 52), in particular by the spout (8, S) thereof.

7. Water boiling device according to claim 6, **characterised in that** the outlet valve (17) has a slide as the actuator (21), which slide can be moved into the open position of the outlet valve (17) counter to the force of a return spring by the spout (8) of the water boiler (2) as the latter is mounted on the power supply unit (5).

8. Water boiling device according to claim 5, **characterised in that** the outlet valve (27) is self-closing and has a valve plunger (35) which can be moved in a valve channel (34) in the direction of a longitudinal axis and passes with its head through a base (36), said valve plunger having a lower support flange (42) against which a pressure spring (41) is supported, said pressure spring being supported with its other end against a flange (40) protruding inwards from the inner surface of the valve channel (34), and the head of said pressure spring carrying a sealing ring (37) which bears against the base region surrounding the valve channel (34) when the valve is closed, wherein the bottom side of the valve plunger (35) forms an actuating surface, against which an actuator (44) acts in order to move the valve plunger (35) into its open position.

9. Water boiling device according to claim 8, **characterised in that** provided as the actuator (44) is a lever mounted on the housing and having an angled actuating portion (47).

10. Water boiling device according to claim 9, **characterised in that** the water boiling device (53) has an actuating lever (48) which is mounted on the housing and is arranged in the spout receptacle (28) and against which the spout (S) of the water boiler (52) acts when the latter is placed on the power supply unit (51) for filling purposes, which actuating lever (48) in turn acts on the actuating portion (47) of the actuator (44) in order to open the outlet valve (27).

11. Water boiling device according to claim 9 or 10, **characterised in that** the valve channel (34) has a slot (43) starting from the outlet-side end thereof, in which slot the actuator (44) engages in order to open the outlet valve (27).

12. Water boiling device according to any one of claims 1 to 11, **characterised in that** the filtering device (3) is mechanically connected to the power supply unit (5).

13. Water boiling device according to claim 12, **characterised in that** the filtering device (3) has a mounting ring (12) which delimits the filtering device (3) at the bottom and by which the power supply unit (5) is surrounded.

## Revendications

1. Dispositif à bouilloire comprenant une bouilloire (2, 52) avec un couvercle (7), pouvant être déposée sur une unité d'alimentation (5, 51) en énergie et raccordée électriquement à cette dernière, comprenant également un dispositif (3, 23) pour filtrer l'eau destinée à remplir la bouilloire (2, 52), avec un réservoir (9, 32) d'eau brute pour stocker l'eau destinée à remplir la bouilloire (2, 52), **caractérisé en ce que** la bouilloire (2, 52) dispose d'un bec (8, S) qui ne peut pas être recouvert par son couvercle (7) et l'écoulement (16, 26) du dispositif de filtrage (3, 23), duquel s'écoule l'eau filtrée destinée à remplir la bouilloire (2, 52), est disposé, lorsque la bouilloire (2) se trouve sur l'unité d'alimentation en énergie (5, 51) à des fins de remplissage, au-dessus de l'ouverture (55) du bec (8, S), de sorte que le bec (8, S) réceptionne l'eau filtrée sortant par l'écoulement (16, 26) pour remplir la bouilloire (2, 52) et **en ce que** le réservoir (9, 32) d'eau brute avec le dispositif de filtrage (3, 23) et son écoulement (16, 26) est placé à un niveau surplombant l'ouverture (55) du bec (8, S) de la bouilloire (2, 52).

2. Dispositif à bouilloire selon la revendication 1, **caractérisé en ce que** l'écoulement (16, 26) du dispositif de filtrage (3, 23) est disposé dans un logement à bec (18, 28) du dispositif de filtrage (3, 23) adapté à la forme du bec (8, S).

3. Dispositif à bouilloire selon la revendication 1 ou 2, **caractérisé en ce que** le dispositif de filtrage (3, 23) comprend un réservoir (9, 32) d'eau brute avec un logement (14) à filtre intégré dans son fond (13) et dans lequel est inséré un élément filtrant (15), l'extrémité inférieure du logement (14) formant l'écoulement (16) du dispositif de filtrage (3).

4. Dispositif à bouilloire selon la revendication 3, **caractérisé en ce qu'**une cartouche filtrante (15, 31) insérée dans le logement (14) à filtre et pouvant être extraite de ce dernier, fait office d'élément filtrant.

5. Dispositif à bouilloire selon l'une des revendications 1 à 4, **caractérisé en ce qu'**un clapet d'écoulement (17, 27), destiné à ouvrir et fermer l'écoulement d'eau du dispositif de filtrage (3, 23), est intégré dans l'écoulement (16, 26).

6. Dispositif à bouilloire selon la revendication 5, **caractérisé en ce que** le clapet d'écoulement (17, 27) se ferme automatiquement et dispose d'un élément de réglage (21, 44) qui peut être actionné par la bouilloire (2, 52) et notamment par son bec (8, S) afin d'ouvrir le clapet d'écoulement (17, 27).

7. Dispositif à bouilloire selon la revendication 6, **caractérisé en ce que** le clapet d'écoulement (17) présente, en guise d'élément de réglage (21), un coulisseau, lequel coulisseau peut être repoussé en position d'ouverture du clapet d'écoulement (17) contre la force d'un ressort de rappel par le bec (8) de la bouilloire (2), lorsque cette dernière est placée sur l'unité d'alimentation en énergie (5).

8. Dispositif à bouilloire selon la revendication 5, **caractérisé en ce que** le clapet d'écoulement (27) se ferme automatiquement et présente un poussoir (35) mobile dans le sens axial longitudinal d'un goulot (34) à clapet, qui traverse un fond (36) par sa tête, avec une bride d'appui (42) inférieure, sur laquelle s'appuie un ressort (41), lequel s'appuie par son autre extrémité sur une bride (40) en saillie vers l'intérieur qui part de la surface d'enveloppe intérieure du goulot (34) à clapet et dont la tête supporte une bague d'étanchéité (37) qui, lorsque le clapet est fermé, se met en appui contre la zone de fond qui englobe le goulot (34) à clapet, la base du poussoir (35) formant une surface de réglage contre laquelle agit un élément de réglage (44) afin de déplacer le poussoir (35) dans sa position d'ouverture.

9. Dispositif à bouilloire selon la revendication 8, **caractérisé en ce qu'**un levier logé du côté châssis, avec un tronçon (47) d'actionnement coudé, est prévu en guise d'élément de réglage (44).

10. Dispositif à bouilloire selon la revendication 9, **caractérisé en ce que** le dispositif à bouilloire (53) présente un levier de réglage (48) logé du côté châssis, disposé dans le logement (28) à bec, contre lequel agit le bec (S) de la bouilloire (52), lorsque celle-ci est placée à des fins de remplissage, sur l'unité d'alimentation en énergie (51), lequel levier de réglage (48) agit à son tour, afin d'ouvrir le clapet (27) d'écoulement, contre le tronçon (47) d'actionnement de l'élément de réglage (44).

11. Dispositif à bouilloire selon la revendication 9 ou 10, **caractérisé en ce que** le goulot (34) à clapet présente une fente (43) partant de son extrémité côté déversement, dans laquelle s'engage l'élément de réglage (44) afin d'ouvrir le clapet (27) d'écoulement.

12. Dispositif à bouilloire selon l'une des revendications 1 à 11, **caractérisé en ce que** le dispositif de filtrage (3) est raccordé mécaniquement à l'unité d'alimentation en énergie (5).

13. Dispositif à bouilloire selon la revendication 12, **caractérisé en ce que** le dispositif de filtrage (3) dispose d'une bague (12) de montage qui borde l'unité d'alimentation en énergie (5), délimitant le dispositif de filtrage (3) en face inférieure.
